# DEMANDE DE BREVET EUROPEEN

(11) **EP 3 045 907 A1**
(43) Date de publication de la demande: **20.07.2016**
(21) Numéro de dépôt: 16150892.4
(22) Date de dépôt: 12.01.2016
(51) Int. Cl.: G01N 31/22

(54) **MATÉRIAU DE DÉTECTION DE COMPOSÉS DU PHÉNOL ET SES APPLICATIONS**

(30) Priorité: 13.01.2015 FR 1550242
(71) Demandeur: COMMISSARIAT A L'ENERGIE ATOMIQUE ET AUX ENERGIES ALTERNATIVES, 75015 Paris (FR); CENTRE NATIONAL DE LA RECHERCHE SCIENTIFIQUE -CNRS-, 75016 Paris (FR)
(72) Inventeur: TRAN-THI, Thu-Hoa, 92120 Montrouge (FR); MUGHERLI, Laurent, 91640 Vaugrigneuse (FR); BORTA, Ana, 91120 Palaiseau (FR)
(74) Mandataire: Cabinet Plasseraud

(57) **Abrégé**

Matériau nanoporeux monolithique, tenant debout tout seul (c'est-à dire auto porté ou cohésif), solide et transparent, essentiellement exempt de fissures, transparent aux UV, obtenu par voie Sol-Gel, ledit matériau présentant un caractère basique et comprenant un réactif capable de générer un produit coloré par formation d'une liaison avec le phénol, un composé basique ou mélange de composés basiques et un composé ou mélange de composés oxydants, procédé de préparation et utilisation dans la détection ou dans la dépollution sélective du phénol ou d'un de ses composés.

## Description

La présente invention concerne un matériau de détection du phénol et ses composés et ses applications.

Le phénol et ses composés sont des composés hautement toxiques. Ceux-ci sont largement utilisés dans la production ou la fabrication d'une grande variété des composés aromatiques y compris les explosifs, les engrais, le gaz d'éclairage, les peintures, le caoutchouc, les textiles, les produits pharmaceutiques, les parfums et les matières plastiques, comme par exemple les polycarbonates ou les résines époxy. Le phénol est couramment utilisé comme intermédiaire dans les procédés chimiques industriels de synthèse et notamment dans les industries du pétrole, des matières plastiques, des colorants, du cuir, du papier, du savon. Dans une moindre mesure, le phénol et ses composés entrent dans la composition des cosmétiques et des médicaments. Dans certains pays, le phénol est également utilisé comme répulsif contre les moustiques et comme insecticide et herbicide pour l'agriculture. Par conséquent, le phénol et ses composés se retrouvent dans l'environnement majoritairement par des rejets industriels, mais aussi par l'activité domestique (métabolisme humain et animal, eaux usées, combustion du fioul domestique). Des traces de phénol sont aussi présentes dans les gaz d'échappement des automobiles ou la fumée de tabac. Depuis 2006 l'utilisation du phénol comme désinfectant a été interdite en France. Cependant des composés du phénol, comme par exemple les chlorophénols sont souvent utilisés en substitution. Ainsi le phénol et ses composés sont omniprésents, dans l'air et dans l'eau, à des concentrations variables en fonction de l'activité humaine.

Le phénol est toxique par inhalation, par contact cutané et par ingestion. Il est également susceptible d'induire des anomalies génétiques. En cas de contact, il provoque des brulures de la peau et des lésions oculaires. Des expositions répétées ou prolongées peuvent induire des effets graves pour les organes, tels que : perturbations digestives, maux de tête, salivation, anorexie, vomissements et perte d'appétit. Il provoque également des dommages de la moelle osseuse.

Les valeurs limites d'exposition professionnelle contraignantes dans l'air des locaux de travail ont été établies en France et en Union Européenne à 2 ppm (7.8 mg/m³) pour une moyenne pondérée sur 8 heures et à 4 ppm (15.6 mg/m³) pour une exposition court terme de 15 min maximum (selon fiche toxicologique de l'Institut National de Recherche et de Sécurité-INRS).

A ce jour, la détection sensible, sélective et fiable du phénol dans un mélange gazeux s'effectue par une méthode indirecte avec prélèvement de gaz puis analyse par la suite en laboratoire.

Pour détecter le phénol en solution, il faut utiliser une méthode différente, la référence étant la méthode colorimétrique fondée sur la 4-aminoantipyrine (AAP), dans laquelle le phénol ne peut pas être ajouté en dernier, et les réactifs, préalablement conservés séparément, doivent être ajoutés au dernier moment, ce qui rend la méthode très complexe. Enfin ces méthodes ne peuvent être utilisées que pour la détection, et en aucun cas à la dépollution, si la présence de phénol est établie.

Il existe de nombreuses méthodes de détection du phénol en solution aqueuse ou dans l'air.

Les méthodes de détection se décomposent principalement en trois familles: les méthodes chromatographiques, les méthodes électrochimiques et les méthodes colorimétriques. D'autres méthodes existent également et sont en cours de développement comme par exemple les méthodes basées sur une micro-variation de masse (résonateurs piézoélectriques).

Les méthodes chromatographiques nécessitent des appareillages coûteux et des procédures complexes. Elles induisent en plus un délai de réponse quand elles sont utilisées de manière indirecte (prélèvement sur le terrain puis analyse dans le laboratoire).

Les méthodes électrochimiques ne sont pas aisément adaptables pour la détection dans l'air et nécessitent souvent l'ajout d'électrodes modifiées contenant des nanoparticules, polymères ou enzymes. Les coûts de telles électrodes et leur vieillissement dans des conditions d'utilisation réelles peuvent constituer un frein à leur industrialisation.

Les méthodes chromatographiques et électrochimiques présentent une complexité intrinsèque soit dans la matière première (enzymes, nanoparticules...), soit dans la préparation (matériaux) soit dans leur protocole de mise en oeuvre (prélèvement, extraction, concentration, purification, ajout des autres réactifs, dosage), soit dans la mesure proprement dite (appareillages sophistiqués, encombrants). A cette complexité est ainsi associé un coût assez important et un temps d'obtention des résultats qui peut être long. De plus, une certaine expertise est requise pour passer les échantillons et interpréter les résultats, car ces méthodes sont loin d'être simples d'emploi.

Les méthodes colorimétriques ont l'avantage d'être plus simples d'utilisation en termes de préparation, prélèvement, mesure, et obtention des résultats. Ces méthodes sont en général directes (pas d'analyse *a posteriori* en laboratoire). La réponse est donc plus rapide. De plus l'appareillage nécessaire est peu couteux, et plus compact.

Dans la littérature, il existe un grand nombre de méthodes de détection colorimétriques du phénol ou de ses composés en solution, utilisant des réactifs en milieu acide, tels que l'acide p-diazobenzènesulfonique (DABS) qui conduit à une couleur jaune, le mélange Fe(II)/1,10-phénantroline qui produit une coloration rose, le mélange formaldéhyde-acide sulfurique (FSA) et sa coloration pourpre, ou encore le bromure d'iode qui forme un produit absorbant dans l'UV. Des réactions en milieu basique ont aussi été décrites, utilisant par exemple le réactif de Folin-Ciocalteu, qui développe une coloration bleue. D'autres réactifs nécessitent l'extraction par un solvant organique du produit coloré, comme par exemple le produit marron du réactif Millon, le produit rose du MBTH (3-Methyl-2-benzothiazolinone hydrazone hydrochloride monohydrate) en présence d'un oxydant, ou encore les complexes de transfert de charge bleus issus de la 2,3-dichloro-5,6-dicyano-p-benzoquinone (DDQ). Certains de ces réactifs sont coûteux, d'autres toxiques. De plus ils peuvent nécessiter une étape d'extraction avant analyse de la couleur. Ils ne sont pas tous suffisamment sensibles et sélectifs.

La méthode le plus couramment employée qui confère une sensibilité et une sélectivité satisfaisante, probablement car c'est la plus simple, est fondée sur l'utilisation de 4-aminoantipyrine (AAP). C'est d'ailleurs la méthode de référence citée par l'Institut National de l'Environnement Industriel et des Risques (INERIS). La méthode implique la formation d'un complexe quinoïque entre la 4-aminoantipyrine et le phénol en milieu basique (préférentiellement pH =9 ou 10) et en présence de l'oxydant hexacyanoferrate de potassium. La coloration se développe après 5 min pour des concentrations supérieures à 1 mg/L soit environ 10 µM (193 ppb) et le composé quinoïque présente un maximum d'absorption vers 510 nm. Il est à noter que pour des concentrations inférieures à 1 mg/L, l'INERIS recommande trois extractions successives au chloroforme, ce qui rend l'opération notablement plus complexe. Dans la littérature, cette réaction est décrite avec différents composés de l'AAP et différents oxydants, ainsi qu'avec différents rapports [AAP]/[oxydant], par exemple Analytical Chimica Acta, 467, 2002, 105-114, Jour. Chem. Soc. Pak., 27, 2005, 271-274, ou Jour. Organ. Chem., 8, 1943, 417-428.

Les composés d'AAP abordés dans certaines publications sont intéressants, notamment ceux qui permettent d'augmenter la sensibilité grâce à un coefficient d'extinction molaire plus élevé. Cependant on ne peut pas se les procurer aisément car ils sont synthétisés à façon pour la plupart. La majorité des méthodes fondées sur l'AAP décrites dans la littérature permettent une détection sélective et sensible de l'ordre de quelques ppb, mais elles utilisent toutes une étape d'extraction au chloroforme qui complexifie le protocole et allonge sa durée. Si l'on veut s'affranchir de cette étape d'extraction, les recommandations de l'INRS et les rares publications avec détection directe en solution aqueuse indiquent une baisse significative de la sensibilité : la méthode ne fonctionne alors correctement que pour des concentrations supérieures à 200 ppb (1 mg/L, 10 µM). Toutes ces méthodes utilisent un excès d'oxydant, et l'ordre de mise en oeuvre des réactifs est toujours le même, à savoir: 1) solution tampon, 2) phénol, 3) AAP, 4) oxydant. Le temps d'attente avant de mesurer l'absorbance varie de 5 à 30 min.

Les tentatives pour adapter cette méthode de référence en phase liquide à la détection du phénol en phase gazeuse ne sont pas convaincantes. En effet, seulement deux brevets ont été déposés, et l'adaptation a nécessité une importante complexification du procédé [Documents de brevets CN102590198 et CN202362242U]. Plusieurs étapes sont ajoutées, notamment dissolution en milieu acide, distillation, stripage, chauffage, extraction. De plus, dans un des brevets, les réactifs sont ajoutés de manière séquentielle, ce qui complexifie encore le procédé [Document de brevet CN202362242U].

L'exposé qui précède montre qu'il n'existe pas à l'heure actuelle de méthode colorimétrique simple et directe fondée sur l'utilisation d'AAP ou de ses composés, qui soit sélective et sensible, et qui permette la détection du phénol en solution en l'ajoutant en dernier. En d'autres termes il n'existe pas de procédé du type précité où l'addition de l'échantillon constitue la dernière étape.

Les méthodes développées pour la détection du phénol dans l'air sont bien moins nombreuses. A une écrasante majorité, les méthodes connues sont effectuées en plusieurs étapes. Premièrement, le prélèvement de l'air contenant du phénol est effectué au travers d'un tube rempli de gel de silice ou de résine (typiquement XAD7), puis ce prélèvement est suivi d'une désorption par des solvants et d'une dérivation par un agent de silylation, ensuite, un dosage est effectué, par chromatographie en phase gazeuse avec détection par ionisation de flamme ou par chromatographie en phase liquide avec détection UV ou électrochimique.

La seule méthode directe, c'est-à-dire sans analyse *a posteriori* en laboratoire, consiste à employer des tubes gradués GASTEC (n°60) ou DRAEGER (Phénol 1/b, MSA Phénol-1). Le principe de la détection est fondé sur la réaction du phénol en milieu acide avec (NH₄)₂Ce(NO₃)₆ (pour GASTEC) et Ce(SO₄)₂ (pour DRAEGER), qui donne un changement de couleur de jaune à brun-vert. Le produit coloré se propage dans le tube avec une vitesse dépendant de la concentration en phénol pour un flux gazeux pompé à un débit déterminé par le fabricant. La lecture de la concentration se fait grâce aux graduations imprimées sur le tube. Le plus performant est le tube GASTEC, avec une gamme de détection de 0,4 à 187 ppm avec une erreur de 10% à 15% indiquée par le fabricant. L'avantage de cette détection est sa simplicité, mais la réaction de détection n'est pas sélective, et il faut appliquer un facteur de correction en fonction de l'humidité et de la température. Ainsi, ces tubes n'assurent ni la sélectivité ni la précision nécessaires à une comparaison à une valeur limite d'exposition professionnelle selon l'INRS. Ces tubes ne peuvent pas être utilisés dans l'eau, ce qui constitue une limitation supplémentaire au procédé.

Il n'existe donc à l'heure actuelle pas de méthode colorimétrique directe, sélective et sensible qui permette la détection du phénol en phase gazeuse. De plus, aucune méthode universelle permettant la détection à la fois dans un mélange gazeux, comme l'air et dans une solution, par exemple aqueuse, par simple mise en contact d'un matériau fonctionnel avec le fluide, n'a été mise au point jusqu'à présent.

Il serait donc souhaitable de disposer d'une telle méthode. La méthode devrait permettre une détection directe, optique ou visuelle réalisable sur le terrain avec un matériel portatif, pour éviter le transport des échantillons à tester dans un laboratoire équipé pour réaliser une telle mesure. La méthode devrait aussi être simple. Elle devrait pouvoir être utilisable aussi bien pour la détection du phénol ou d'un composé du phénol dans un mélange gazeux ou liquide. La méthode devrait pouvoir si possible non seulement être utilisée pour la détection, mais aussi pour la dépollution sélective du phénol et de ses composés.

La présente invention permet de résoudre tout ou partie des problèmes techniques liés à la détection du phénol ou d'un composé du phénol évoqués ci-dessus.

Après de longues recherches, les inventeurs ont mis au point une méthode qui s'inspire de la réaction colorimétrique en solution fondée sur l'AAP, mais avec des changements majeurs, qui ont conduit à une méthode précise et fiable mais considérablement simplifiée, en imaginant un nouveau matériau.

Avec la méthode de référence, l'oxydant est toujours utilisé en excès et l'ordre d'ajout des réactifs est très important : 1) solution tampon, 2) phénol, 3) AAP, 4) oxydant. En présence d'un excès d'oxydant, si cet ordre n'est pas respecté, le changement de couleur ne se produit pas.

Or, le matériau de la présente invention contient déjà tous les réactifs nécessaires à la réaction colorée. Donc le phénol (ou composé du phénol) est forcément mis au contact des autres réactifs en dernier. La conservation des réactifs colorés au sein du matériau de la présente invention n'était pas évidente en présence d'oxydant, d'autant plus que toutes les méthodes décrites dans la littérature utilisent un excès d'oxydant (typiquement 6 équivalents molaires).

Par ailleurs, des matériaux nanoporeux monolithiques transparents obtenus par la voie Sol-Gel ont déjà été décrits dans FR2890745 et FR2969295. Cependant les matériaux décrits dans ces documents de brevet ne présentent pas un caractère basique, caractère nécessaire pour le bon déroulement de la réaction dans la présente invention. De plus, l'incorporation dans une même matrice sol gel d'un réactif colorimétrique et d'un oxydant n'avait encore jamais été décrite ni suggérée.

C'est pourquoi la présente demande a pour objet un matériau nanoporeux monolithique, tenant debout tout seul (c'est-à dire auto porté ou cohésif), solide et transparent, essentiellement exempt de fissures, transparent aux UV, obtenu par voie Sol-Gel, ledit matériau présentant un caractère basique et comprenant
- un réactif capable de générer un produit coloré par formation d'une liaison avec le phénol ou un composé du phénol,
- un composé basique ou mélange de composés basiques et
- un composé ou mélange de composés oxydants.

Pour rappel, un matériau Sol-Gel est un matériau obtenu par un procédé Sol-Gel. Ce procédé peut notamment être mis en oeuvre en utilisant comme précurseurs des alcoxydes de formule M(OR)ₙ, R'-M(OR)ₙ₋₁ ou encore des silicates de sodium. M est un métal, notamment le silicium, et R ou R' des groupements alkyles, n est le degré d'oxydation du métal. En présence d'eau, l'hydrolyse des groupements alkoxy (OR) intervient, formant des petites particules de taille généralement inférieure à 1 nanomètre. Ces particules s'agrègent et forment des amas qui restent en suspension sans précipiter, et forment un sol. L'augmentation des amas augmente la viscosité du milieu qui gélifie. Un matériau Sol-Gel est obtenu par séchage du gel, en évacuant le solvant en dehors du réseau polymérique formé. Ce matériau absorbe dans l'UV mais pas dans le visible.

Dans la présente demande et dans ce qui suit, l'expression "essentiellement exempt de fissures" signifie que le matériau monolithique est exempt de fissures susceptibles de perturber la mesure optique.

Le matériau Sol-Gel de l'invention peut être préparé essentiellement à partir d'un ou plusieurs premier(s) polyalcoxysilane(s) choisi(s) parmi les composés suivants : (chlorométhyl)triéthoxysilane ; 1,3-diméthyltetraméthoxydisiloxane ; éthyltriméthoxysilane; triéthoxy(éthyl)silane; triéthoxyméthylsilane; triéthoxy(vinyl)silane ; triméthoxyméthylsilane; triméthoxy(vinyl)silane; tétraéthoxysilane ou tétraméthoxysilane et avantageusement un seul polyalcoxysilane et plus particulièrement le tétraméthoxysilane (TMOS) et d'unités d'un ou plusieurs second(s) polyalcoxysilane(s) choisi(s) parmi les composés suivants : (N-(3-(triméthoxysilyl)propyl)éthylènediamine; 3-aminopropyltriéthoxysilane (APTES) et 3-aminopropyltriméthoxysilane et avantageusement le 3-aminopropyltriéthoxysilane, dans un rapport molaire premier(s) polyalcoxysilane(s) / second(s) polyalcoxysilane(s) de 1/0,01 à 1/1, de préférence de 1/0,01 à 1/0,50, notamment de 1/0,01 à 1/0,30, particulièrement de 1/0,01 à 1/0,15, tout particulièrement de 1/0,02 à 1/0,06 ; de préférence le premier polyalcoxysilane est le TMOS. Il est à noter que le (N-(3-(triméthoxysilyl)propyl)éthylènediamine, le 3-aminopropyltriéthoxysilane (APTES) et le 3-aminopropyltriméthoxysilane comportent au moins une fonction amine primaire.

On préfère des matériaux Sol-Gel poreux pouvant être préparés essentiellement à partir d'un ou plusieurs premier(s) polyalcoxysilane(s) et d'un seul second polyalcoxysilane, et particulièrement d'un seul premier polyalcoxysilane et d'un seul second polyalcoxysilane. Parmi les seconds polyalcoxysilanes entrant dans la composition du matériau, on préfère le 3-aminopropyltriéthoxysilane (APTES).

Des matériaux Sol-Gel particulièrement préférés sont préparés essentiellement à partir de tétraméthoxysilane (TMOS) et de 3-aminopropyltriéthoxysilane (APTES) dans un rapport molaire TMOS/APTES de 1/0,01 à 1/0,30, de préférence de 1/0,01 à 1/0,15, avantageusement de 1/0,01 à 1/0,10, notamment de 1/0,02 à 1/0,06, tout particulièrement de 1/0,03 et comprennent donc des unités de l'un et l'autre(s) dans de telles proportions.

La molécule réactive utilisée est un réactif capable de générer un produit coloré par formation d'une liaison avec le phénol ou un composé du phénol. Plus précisément, le réactif est un composé qui permet à une couleur de se développer par formation d'une liaison habituellement covalente avec le phénol ou composé du phénol, pour former un produit coloré, par exemple un composé quinoïque. La molécule réactive est de préférence l'AAP mais peut-être également un composé de l'AAP, comme par exemple un composé correspondant à la formule I 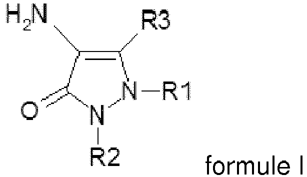 où : R1 est un radical alkyl renfermant de 1 à 30, notamment 1 à 12, préférentiellement 1 à 6 atomes de carbone, linéaire ou ramifié, ou un radical aryl, de préférence phényl, préférentiellement un radical C₆H₅, CH₃ ou C₂H₅; R2 est un radical phényl ou para-aminophényl, préférentiellement ce dernier; R3 est un radical alkyle renfermant de 1 à 30, notamment 1 à 12, préférentiellement 1 à 6 atomes de carbone, linéaire ou ramifié, ou phényl éventuellement substitué, de préférence en position para, par exemple par un radical amino ou halogèno, tel un radical para-aminophényl ou parachlorophényl.

Un matériau nanoporeux monolithique de l'invention contient également un composé basique ou mélange de composés basiques. Le procédé de préparation du matériau nanoporeux monolithique de l'invention nécessite en effet un milieu basique c'est-à-dire correspondant à un pH dans le sol supérieur à 7, et préférentiellement de 9 à 10. Une des méthodes pour obtenir ce milieu basique est l'utilisation d'une solution tampon, comme par exemple un tampon phosphate, 2-amino-2-(hydroxyméthyl)-1,3-propanediol, carbonate, glycine-soude, ou préférentiellement un tampon borate pour obtenir un pH égal à environ 9 ou 10. Eventuellement, de la soude peut aussi être employée, seule ou en mélange avec les solutions tampons précitées. Le matériau nanoporeux monolithique de l'invention contient donc de tels composés basiques ou mélange de composés basiques avec l'acide faible correspondant le cas échéant. Par exemple en utilisant du tampon borate à pH 10, le matériau nanoporeux monolithique de l'invention contient des ions borates, de l'acide borique (acide faible principalement sous forme non dissociée en solution diluée) et de la soude. Ce caractère basique est nécessaire pour le bon déroulement de la réaction qui permet d'incorporer dans une même matrice un réactif coloré et un oxydant.

Un matériau nanoporeux monolithique de l'invention contient également un composé ou mélange de composés oxydants. Le composé oxydant ou les composés oxydants sont avantageusement choisis dans le groupe constitué par le persulfate de potassium, le peroxomonosulfate de potassium ; le peroxyde d'hydrogène ou l'hexacyanoferrate de potassium. On utilise avantageusement ce dernier qui permet un bon compromis entre douceur de l'oxydation et vitesse de réaction. D'autres oxydants que ceux de la liste non exhaustive ci-dessus sont possibles.

Le composé oxydant ou les composés oxydants sont particulièrement choisis dans le groupe constitué par l'hexacyanoferrate de potassium, le persulfate de potassium, le peroxomonosulfate de potassium ; le peroxyde d'hydrogène ou un mélange d'hexacyanoferrate de potassium et un ou plusieurs autres composés oxydants.

Le matériau nanoporeux monolithique de l'invention tient debout tout seul. En d'autres termes, il est auto-porté (self-standing) ou cohésif. Pour rappel, un matériau est dit cohésif, par opposition à friable (par ex. la neige) ou liquide (gel), pour signaler son aptitude à rester stable sous l'action de forces internes.

A noter que dans la présente demande, classiquement l'article indéfini "un" doit être considéré comme un pluriel générique (signification de "au moins un" ou encore "un ou plusieurs"), sauf lorsque le contexte montre le contraire (1 ou "un seul"). Ainsi, par exemple, lorsque l'on dit ci-dessus que le matériau nanoporeux monolithique de l'invention comprend un réactif capable de générer un produit coloré par formation d'une liaison avec le phénol ou composé du phénol ou comprend un composé basique, il convient de comprendre que le matériau contient un ou plusieurs tels réactifs ou composés basiques.

Dans des conditions préférentielles de mise en oeuvre de l'invention, le réactif capable de générer un produit coloré par formation d'une liaison avec le phénol ou un composé du phénol est l'AAP, et le composé basique ou mélange de composés basiques est choisi parmi les ions borates et la soude, le composé oxydant ou les composés oxydants est l'hexacyanoferrate de potassium ou un mélange d'hexacyanoferrate de potassium et un ou plusieurs autres composés oxydants.

Un matériau nanoporeux monolithique de l'invention contient une quantité de réactif capable de générer un produit coloré par formation d'une liaison avec le phénol ou composé du phénol en relation avec l'utilisation dudit matériau. Pour une utilisation en dépollution, on utilisera avantageusement des proportions importantes de réactif capable de générer un produit coloré par formation d'une liaison avec le phénol ou un composé du phénol. Mais des proportions importantes seraient rédhibitoires dans une utilisation pour la détection, par exemple en raison d'une saturation d'un détecteur.

Le ratio pondéral [réactif capable de générer un produit coloré par formation d'une liaison avec le phénol]/[ composé ou mélange de composés oxydants] pourra également dépendre de l'utilisation envisagée.

Par exemple, pondéralement, dans le cadre de la détection, on utilisera avantageusement un ratio pondéral:
- de 25% à 0,005%, de préférence de 18% à 0,008%, notamment de 5% à 0,008%, particulièrement de 2% à 0,1%, tout particulièrement de 1% à 0,1% de molécule-sonde.
- de 5% à 0,05%, de préférence de 3% à 0,1%, notamment de 2% à 0,2%, particulièrement de 1% à 0,4%, tout particulièrement de 0,7% à 0,5% de composé basique ou mélange de composés basiques.
- de 15% à 0,01%, de préférence de 10% à 0,02%, notamment de 8% à 0,02%, particulièrement de 2% à 0,05%, tout particulièrement de 1% à 0,1% de composé ou mélange de composés oxydants.

Et pondéralement, dans le cadre de la dépollution, on utilisera avantageusement un ratio pondéral:
- de 50% à 0,05%, de préférence de 30% à 0,03%, notamment de 18% à 0,05%, particulièrement de 5% à 0,1%, tout particulièrement de 1% à 0,1% de molécule-sonde.
- de 5% à 0,05%, de préférence de 3% à 0,1%, notamment de 2% à 0,2%, particulièrement de 1% à 0,4%, tout particulièrement de 0,7% à 0,5% de composé basique ou mélange de composés basiques.
- de 25% à 0,01%, de préférence de 12% à 0,02%, notamment de 8% à 0,02%, particulièrement de 2% à 0,05%, tout particulièrement de 1% à 0,1% de composé ou mélange de composés oxydants.

L'homme du métier adaptera ces différentes valeurs pondérales de telle sorte que le ratio pondéral [molécule-sonde]/[composé ou mélange de composés oxydants] dans le cadre de la détection soit par exemple de 10/1 à 1/3, de préférence de 5/1 à 1/2, tout particulièrement de 1/1. Pour un ratio pondéral élevé une certaine instabilité peut être rencontrée, par instabilité on entend une intensification de la couleur du matériau avant exposition. Pour un ratio pondéral très faible il est possible d'obtenir une cinétique plus lente, par cinétique lente on entend une réponse du capteur qui peut prendre jusqu'à quelques semaines.

De la même façon, l'homme du métier adaptera ces différentes valeurs pondérales de telle sorte que le ratio pondéral [molécule-sonde]/[composé ou mélange de composés oxydants] dans le cadre de la dépollution soit par exemple de 15/1 à 1/3, de préférence de 5/1 à 1/2, tout particulièrement de 1/1.

Lorsque l'on veut réaliser un matériau nanoporeux monolithique de l'invention destiné à la dépollution, on utilise avantageusement des quantités importantes de réactif capable de générer un produit coloré par formation d'une liaison avec le phénol ou composé du phénol et des quantités faibles d'oxydant.

La présente demande a aussi pour objet un procédé de préparation d'un matériau nanoporeux monolithique ci-dessus, caractérisé en ce que dans le même récipient on ajoute un ou plusieurs précurseurs de sol gel à une solution de réactif capable de générer un produit coloré par formation d'une liaison avec le phénol ou composé du phénol, puis ajoute le composé oxydant ou le mélange de composés oxydants puis le composé basique ou mélange de composés basiques pour obtenir un pH supérieur à 7, où au moins un de ces composés est en solution aqueuse, pour obtenir un sol que l'on installe dans un ou plusieurs moules, de préférence on ferme hermétiquement les moules, puis évapore les solvants sous atmosphère inerte pour obtenir le matériau nanoporeux monolithique désiré.

Dans des conditions préférentielles de mise en oeuvre du procédé ci-dessus,
- le réactif capable de générer un produit coloré par formation d'une liaison avec le phénol ou un composé du phénol est en solution dans un solvant alcoolique, de préférence le méthanol.
- le composé basique ou mélange de composés basiques est ajouté en quantité suffisante pour conférer au milieu réactionnel un pH supérieur à 7, de préférence de 7,5 à 10,5, notamment de 8 à 10, particulièrement de 8,5 à 9,5, tout particulièrement de 9 environ.
- les moules sont fermés hermétiquement pour permettre la gélification sans évaporation des solvants. Le maintien dans de telles conditions dure par exemple de 0 à 192 heures, de préférence de 4 à 120 heures, notamment de 12 à 96 heures, particulièrement de 24 à 72 heures, tout particulièrement environ 48 heures.
- L'évaporation des solvants est réalisée sous atmosphère inerte, par exemple avec comme gaz vecteur l'argon, l'azote ou l'air, et de préférence sous atmosphère d'azote. L'évaporation des solvants est avantageusement réalisée lentement, par exemple pendant 4 semaines. Préférentiellement, le gaz vecteur utilisé pour le séchage a une humidité relative permettant d'éviter le craquèlement du matériau

Si dans des conditions préférentielles de mise en oeuvre de l'invention, le composé basique ou mélange de composés basiques est ajouté dans le milieu réactionnel après les précurseurs de sol gel, il est possible bien que ce soit moins pratique, de changer l'ordre d'introduction.

Incorporer dans un seul matériau un réactif capable de générer un produit coloré par formation d'une liaison avec le phénol ou composé du phénol, et un composé oxydant ou mélange de composés oxydants, composants essentiels à la réaction dans le même matériau que celui contenant le réactif capable de générer un produit coloré par formation d'une liaison avec le phénol ou un composé du phénol était un défi. En effet le matériau devait demeurer transparent, monolithique, et présenter un changement de propriétés optiques lié à la concentration en phénol ou composé du phénol.

Les matériaux nanoporeux monolithiques objet de la présente invention possèdent de très intéressantes propriétés. Ils sont constitués d'une matrice nanoporeuse perméable aux gaz et aux liquides incorporant l'ensemble des réactifs nécessaires à la détection du phénol ou composé du phénol. La réaction de cette matrice avec le phénol est facilement détectable par un changement de propriétés optiques (couleur/absorbance/réflectance). La formulation du matériau de l'invention lui permet d'être directement exposé au phénol ou composé du phénol en phase gaz mais aussi en phase liquide, avec une grande simplicité d'emploi, tout en rendant possible une détection optique directe.

Un matériau de l'invention est stable pendant plusieurs mois.

Ces matrices Sol-Gel peuvent ainsi être utilisées pour détecter le phénol, ou un composé du phénol, comme par exemple les alkoxyphénols, nitrophénols, chlorophénols, ou phénols polyaromatiques. Cette détection peut se faire indifféremment dans un mélange gazeux ou en phase liquide, dans les solutions aqueuses, ou dans certains solvants ou mélanges de solvants et d'eau.. Leur fonctionnement est fondé sur le déroulement d'une réaction chimique dans la matrice qui génère un signal détectable optiquement. Le suivi de ce signal optique au cours du temps permet de déterminer la vitesse de la réaction, qui est ensuite reliée à la concentration en composé gazeux recherché par exemple au moyen d'une courbe de calibration. La détection optique est rapide et réalisable in situ en une seule étape.

Les matériaux nanoporeux monolithiques objet de la présente invention permettent de détecter des concentrations de phénol ou composé du phénol à partir de 15 ppb, soit des concentrations bien inférieures à la limite actuelle de 193 ppb pour la réaction de référence avec l'AAP, tel que recommandé par l'INERIS en France. Les quelques ppm évoqués par l'INRS pour les expositions des travailleurs sont *a fortiori* détectables avec les matériaux nanoporeux monolithiques objet de la présente invention.

Les matériaux nanoporeux monolithiques objet de la présente invention permettent de résoudre avec simplicité plusieurs problèmes techniques liés à la détection du phénol ou composé du phénol. Ils permettent une détection directe (mesure optique ou visuelle), pouvant être réalisée sur le terrain avec du matériel portatif.

Il suffit de mettre un matériau nanoporeux monolithique de la présente invention, prêt-à-l'emploi et incorporant une ou plusieurs molécules-sondes en contact avec un fluide contenant du phénol ou composé du phénol pour amorcer une réaction chimique qui génère un changement des propriétés optiques de la matrice, changement qui est directement relié à la concentration de phénol ou composé du phénol dans le fluide.

Les matériaux nanoporeux monolithiques objet de la présente invention permettent la détection du phénol ou des composés du phénol dans un mélange gazeux ou liquide.

Enfin, des problèmes techniques purement liés à l'emploi de matériaux poreux ont aussi été résolus : un oxydant est incorporé dans une formulation stable pendant plusieurs mois. Une solution tampon basique est aussi incorporée dans cette même formulation. Il n'était pas évident que le fait d'incorporer un oxydant ou une solution tampon basique parmi les réactifs colorimétriques, dans un matériau poreux, pourrait se faire tout en préservant ses qualités, notamment la transparence, la tenue mécanique et la fonction de détection. Enfin, ces matériaux poreux peuvent non seulement être utilisés pour la détection, mais aussi pour la dépollution sélective du phénol et de ses composés.

Les composés du phénol sont par exemple des alkoxyphénols, des nitrophénols, des chlorophénols, ou des phénols polyaromatiques. On peut citer particulièrement le 4-méthoxyphénol, le 2-nitrophénol, le 2,4-dichlorophénol, ou le naphtol, mais encore le crésol, le catéchol, le résorcinol, 2,4-diméthylphénol, 4-chloro-3-méthylphénol, le 4-nitrophénol, le 2,4-dinitrophénol, le 4,6-dinitrophénol, le 4-chlorophénol, le 2-chlorophénol, le 2,4,6-trichlorophénol, le pentachlorophénol .

En résumé, les nouveaux matériaux monolithiques nanoporeux de l'invention permettent de réaliser une détection colorimétrique directe. Leur utilisation pour détecter le phénol ou les composés du phénol, quelle que soit leur origine, présente les avantages de simplicité d'utilisation, sélectivité aux phénols, et faible coût de production. Ils peuvent être utilisés indifféremment dans un mélange gazeux, dans les solutions aqueuses, ou dans certains solvants ou mélanges de solvants et d'eau.

Ces propriétés sont illustrées ci-après dans la partie expérimentale. Elles justifient l'utilisation des matériaux monolithiques nanoporeux de l'invention ci-dessus décrits, dans la détection, la mesure, mais aussi dans la dépollution sélective du phénol et de ses composés.

L'invention s'avère utile notamment dans le cadre de la surveillance journalière ou hebdomadaire sur le lieu de travail, ou pour détecter des pics de pollution dans l'air ou dans l'eau, en particulier dans les eaux résiduaires.

En vue de leur utilisation, les matériaux de l'invention peuvent notamment être utilisés comme suit :
Pour la détection en phase gazeuse un utilisateur doit simplement placer un matériau de l'invention en contact avec le phénol ou les composés de phénol à détecter au sein d'un mélange gazeux, comme par exemple l'air. Ce contact peut être effectué en plaçant la matrice dans une atmosphère dont on veut contrôler la teneur en gaz à détecter (mesure statique), ou en faisant passer un flux de gaz sur la matrice (mesure dynamique).

La gamme de débit pour le flux de gaz peut-être par exemple comprise entre 20mUmin et 1L/min, préférentiellement entre 200 et 500 mL/min. Un débit de gaz excessif serait à flux perdu. Le produit de la réaction entre les divers composés réactifs de la matrice et les composés gazeux recherchés absorbe dans le visible, avec un maximum proche de 510 nm pour l'AAP. A l'absorbance est associé un changement de couleur de la matrice visible à l'oeil nu. La détection peut donc être qualitative ou quantitative, et peut couvrir des concentrations de phénol ou composé du phénol comprises entre une dizaine de ppb et plusieurs ppm. Lors des expositions, un matériau de l'invention demeure transparent et aucune fissure détectable à l'oeil nu n'apparait.

C'est pourquoi la présente demande a aussi pour objet l'utilisation des matériaux nanoporeux monolithiques ci-dessus décrits dans la détection du phénol ou d'un de ses composés comme par exemple le 4-méthoxyphénol, le 2-nitrophénol, le 2,4-dichlorophénol, ou le naphtol, mais encore le crésol, le catéchol, le résorcinol, 2,4-diméthylphénol, 4-chloro-3-méthylphénol, le 4-nitrophénol, le 2,4-dinitrophénol, le 4,6-dinitrophénol, le 4-chlorophénol, le 2-chlorophénol, le 2,4,6-trichlorophénol, le pentachlorophénol.

La présente demande a particulièrement pour objet un procédé de détection du phénol ou de ses composés comme par exemple le 4-méthoxyphénol, le 2-nitrophénol, le 2,4-dichlorophénol, ou le naphtol, mais encore le crésol, le catéchol, le résorcinol, 2,4-diméthylphénol, 4-chloro-3-méthylphénol, le 4-nitrophénol, le 2,4-dinitrophénol, le 4,6-dinitrophénol, le 4-chlorophénol, le 2-chlorophénol, le 2,4,6-trichlorophénol, le pentachlorophénol. comprenant les étapes consistant à
- procurer un matériau nanoporeux de l'invention
- mettre en contact avec un fluide contenant éventuellement du phénol ou un de ses composés,
- détecter un éventuel changement de propriétés optiques du réactif capable de générer un produit coloré par formation d'une liaison avec le phénol ou composé du phénol.

Dans des conditions préférentielles de mise en oeuvre, le procédé ci-dessus décrit comprend en outre l'étape consistant à mesurer le changement de propriétés optiques, ce qui permet une mesure quantitative du phénol et de ses composés.

Pour la détection en solution, l'utilisateur peut simplement placer un matériau nanoporeux de l'invention en contact avec le prélèvement à mesurer. Ce contact peut être effectué par simple trempage (mesure statique), ou en faisant circuler une solution sur un matériau nanoporeux de l'invention avec un certain débit de préférence connu (mesure dynamique). Lors de ce contact, on observe une évolution de l'absorbance au cours du temps, dans la zone 400-800 nm, avec un maximum proche de 510 nm pour l'AAP et le phénol, qui peut être suivie. A cette évolution d'absorbance est associé un changement de couleur visible à l'oeil nu. Ceci est un avantage important car cela permet de faire des mesures qualitatives ou quantitatives sur le matériau nanoporeux de l'invention.

Après avoir mis le matériau nanoporeux de l'invention en contact avec la solution, il est aussi possible de réaliser la mesure directement sur la solution, car elle change de couleur aussi, le produit coloré se retrouvant en solution. Le matériau nanoporeux de l'invention se comporte alors comme un réservoir qui contient tous les réactifs nécessaires à la réaction colorée, ce qui permet d'éviter les étapes de conservation, préparation et ajout des réactifs (pesée, solutions tampon, dilutions, etc.), ce qui permet déjà une simplification importante par rapport à la réaction en solution de l'art antérieur.

La réaction présente aussi l'avantage d'avoir lieu aussi si certains solvants polaires sont mélangés à l'eau, comme les alcools ou les éthers cycliques, en particulier l'éthanol ou le tétrafydrofurane.

La présente demande a aussi pour objet l'utilisation d'un matériau nanoporeux monolithique ci-dessus décrit dans la dépollution sélective du phénol ou d'un de ses composés, notamment dans l'air ou d'autres mélanges gazeux. En particulier ces matériaux peuvent être employés pour l'épuration de l'atmosphère dans des espaces fermés, éventuellement confinés ou disposant d'un système de recyclage de l'air ou d'un mélange gazeux.

La dépollution peut être réalisée selon les mêmes protocoles qu'indiqué ci-dessus pour la détection.

Les avantages principaux par rapport aux méthodes actuelles de dépollution sont non seulement la sélectivité, mais aussi le changement de couleur qui permet de connaitre l'état d'usure du matériau en temps réel. Grâce à l'absorbance mesurée dans un matériau monolithe, on peut estimer le rendement de piégeage. Sous 500 mL/min, environ 5% en moles du phénol circulant dans le flux est piégé avec un seul matériau monolithe comme celui préparé ci-après à l'exemple 1. Dans des conditions optimisées de flux, forme et nombre de monolithes, ce rendement de piégeage peut être augmenté significativement.

La dépollution peut aussi être faite dans l'eau, mais dans ce cas il faut adapter la formulation pour éviter le relargage des produits de réaction dans la solution.

En général, pour la dépollution, de plus grandes quantités de matériau nanoporeux de l'invention sont utilisées. Également, on utilise alors de préférence des blocs de matériau nanoporeux de l'invention pour en augmenter la surface spécifique favorisée les échanges et ainsi accélérer le temps nécessaire à la dépollution.

Les conditions préférentielles de mise en oeuvre des matériaux nanoporeux monolithiques ci-dessus décrites s'appliquent également aux autres objets de l'invention visés ci-dessus, notamment aux procédés pour leur préparation ainsi qu'à leurs utilisations.

Les exemples qui suivent illustrent la présente demande.

L'invention sera mieux comprise si l'on se réfère aux dessins annexés sur lesquels
- la figure 1 représente une photographie vue de dessus d'un bloc de matériau de l'exemple 1 installé sur une règle.
- la figure 2 représente l'évolution des spectres d'absorption de l'expérimentation 1 pour une matrice de l'exemple 1.
- la figure 2A représente l'évolution des spectres d'absorption de l'expérimentation 1 pour une matrice de l'exemple 1 A.
- la figure 3 représente l'évolution de l'absorbance dans le temps à 510 nm dans l'expérimentation 1 pour une matrice de l'exemple 1.
- la figure 3A représente l'évolution de l'absorbance dans le temps à 510 nm dans l'expérimentation 1 pour une matrice de l'exemple 1 A.
- la figure 4 représente une photographie d'un bloc de matériau de l'exemple 1 après exposition au phénol
- la figure 5 représente une courbe de calibration pour la détection/le dosage du phénol
- la figure 6 représente des photographies de blocs de matériau de l'exemple 1 après exposition à différents composés du phénol
- la figure 7 représente une courbe de calibration pour la détection du phénol, en solution aqueuse.

### Exemple 1 : Préparation d'une matrice sol gel

Dans 11,74 mL de méthanol agité et refroidi à environ -25°C, on ajoute 300 µL d'AAP 0,1 M. On ajoute ensuite 10,74 mL de tétraméthyl-orthosilicate, puis 0,528 mL d'aminopropyl-triéthoxysilane. 300 µL d'hexacyanoferrate de potassium 0,1 M et 6,396 mL de solution tampon borate 0,05 M à pH 9 sont alors ajoutés.

On prélève le sol pour le couler dans des moules qui sont fermés hermétiquement pendant 48 heures, puis les solvants sont progressivement évaporés dans une atmosphère d'azote.

### Exemple 1 A : Préparation d'une matrice sol gel (avec une autre formulation)

Dans 6.926 mL de méthanol agité et refroidi à environ -25°C, on ajoute 300 µL d'AAP 0,1 M. On ajoute ensuite 6.447 mL de tétraméthyl-orthosilicate, puis 0,252 mL (3-Chloropropyl)trimethoxysilane. 300 µL d'hexacyanoferrate de potassium 0,1 M, 9.776 mL H₂O et 6,0 mL de solution tampon borate 0,05 M à pH 9 sont alors ajoutés.

On prélève le sol pour le couler dans des moules qui sont fermés hermétiquement pendant 48 heures, puis les solvants sont progressivement évaporés dans une atmosphère d'azote

Pour les matrices des exemples 1 et 1 A, différentes formes ont été obtenues en fonction du moule utilisé. Les moules suivants ont été utilisés:
- a. Moules parallélépipédiques de dimensions 2*10*20, en mm.
- b. Moules parallélépipédiques de dimensions 4*10*50, en mm.
Ils ont été remplis avec un volume d'environ 400 µL pour les moules de type a et 1 mL pour les moules de type b.

Les matériaux de l'invention ainsi obtenus sont des matrices sol gel. Ils sont transparents et sans fissures. À l'abri de la lumière, ils peuvent être conservés plusieurs mois.

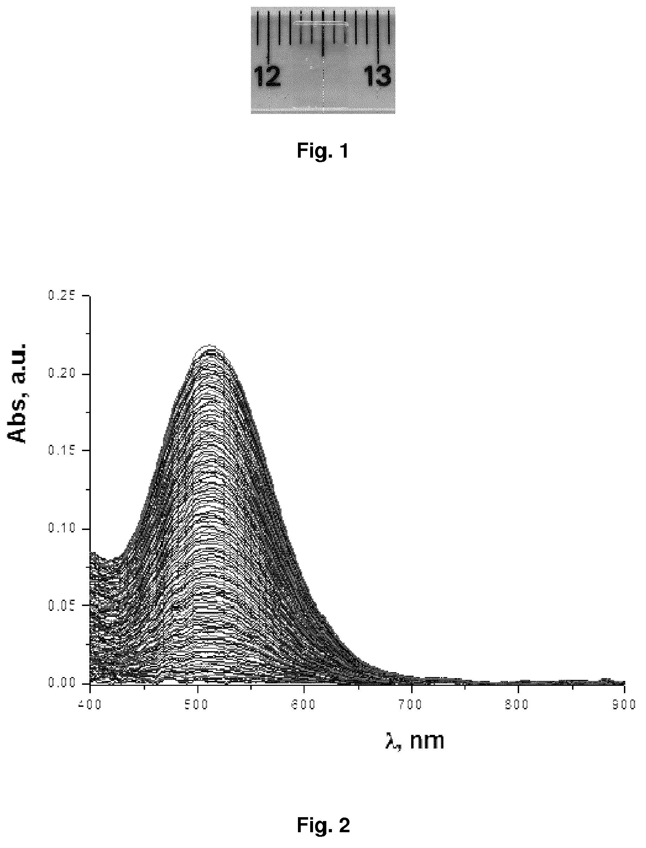

La figure 1 est une photographie d'un matériau selon l'invention posée sur une règle. La matrice fait ici environ 5 mm de large sur 8,2 millimètres de long. Son épaisseur est d'environ 1 millimètre.

### Expérimentation 1 : Exposition d'une matrice à un flux gazeux contenant du phénol

Le fonctionnement des matériaux de l'invention est fondé sur le déroulement d'une réaction chimique dans la matrice, qui génère un signal détectable optiquement. Le suivi de ce signal optique au cours du temps permet de déterminer la vitesse de la réaction, qui peut ensuite être reliée à la concentration en composé gazeux recherché au moyen d'une courbe de calibration. La détection optique est rapide et réalisable in situ en une seule étape.

Une matrice Sol-Gel de l'exemple 1 ou de l'exemple 1 A, préparée en utilisant un moule de type a est exposée à un flux gazeux continu de 500 mL/min contenant une concentration fixe de 100 ppb de phénol sous humidité relative de 50%. Le phénol gazeux est généré à l'aide d'un four à perméation, puis dilué avec de l'air à la concentration voulue, et amené en entrée d'une cellule de mesure abritant la matrice Sol-Gel à l'aide d'un tuyau d'environ 3 mm de diamètre, et possédant une entrée et une sortie de gaz adaptées à de tels tuyaux, ainsi qu'une entrée et une sortie optique permettant de connecter des fibres optiques. Pour limiter la lumière parasite, la cellule est réalisée de telle manière à ce que la lumière ambiante ne pénètre pas dans la cellule.

Lors de l'exposition, le polluant circule dans la cellule tandis qu'une source deutérium-halogène (Ocean Optics, DH-2000-BAL) éclaire la matrice par l'entrée optique et que des spectres d'absorption sont enregistrés par un spectrophotomètre UV-Visible (Ocean Optics, QE65000). Le suivi de la variation de l'absorbance au cours du temps d'exposition permet d'observer l'apparition d'un pic à 510 nm caractéristique du produit de réaction entre le phénol et le réactif capable de générer un produit coloré par formation d'une liaison avec le phénol incorporée au matériau de l'invention.

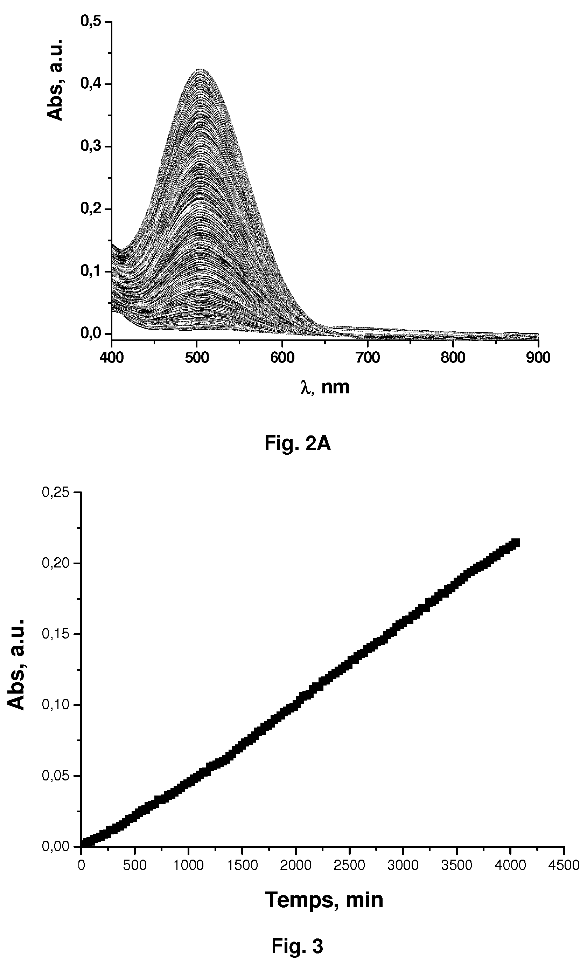

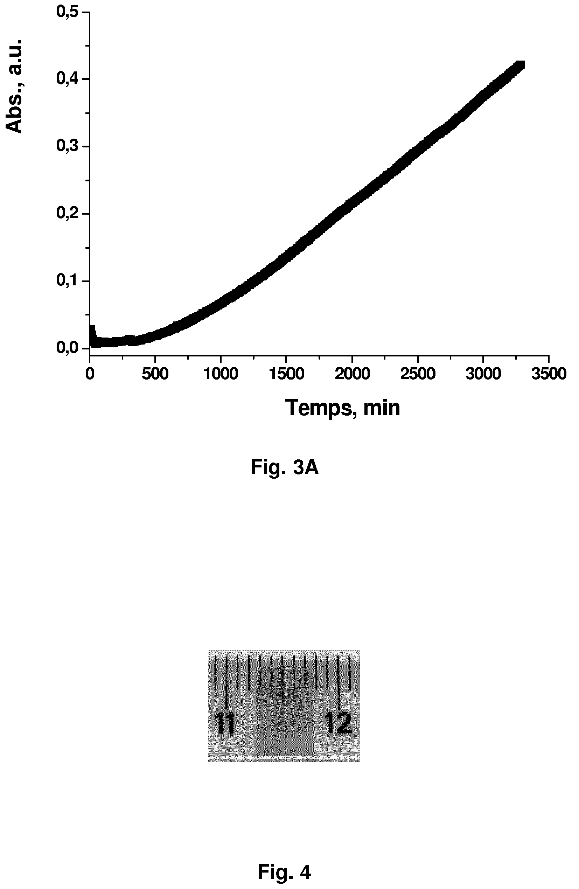

L'intensité de ce pic augmente au cours de l'exposition. Les spectres sont reportés sur la figure 2 pour la matrice de l'exemple 1 et sur la figure 2A pour la matrice de l'exemple 1 A et l'évolution de l'absorbance dans le temps à 510 nm sur la figure 3 pour la matrice de l'exemple 1 et sur la figure 3A pour la matrice de l'exemple 1A. La photo d'une matrice après l'exposition est montrée dans la figure 4.

L'évolution des spectres (figure 2 et 2A) montrent que l'absorbance du matériau augmente en présence de phénol. La pente à 510 nm (figure 3 et 3A) met en évidence que l'on peut relier l'augmentation d'absorbance à une longueur d'onde donnée à l'interaction d'une certaine concentration de phénol avec le matériau. La comparaison de la photo de la figure 4 et de la photo de la figure 1 montre que l'augmentation d'absorbance est visible à l'oeil nu

### Expérimentation 2: Courbe de calibration du phénol

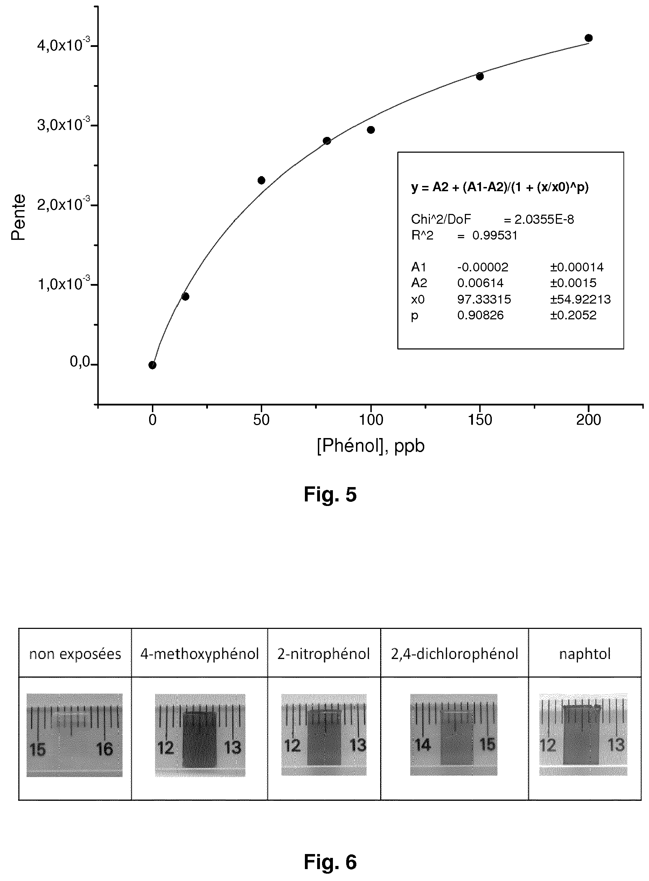

Le même procédé qu'à l'expérimentation 3 est répété pour différentes concentrations de phénol à un débit de 500 mL/min. La vitesse de formation du produit de réaction entre le phénol et la matrice dopée de molécules-sondes est dépendante de la concentration du phénol contenu dans le flux gazeux. Ainsi, le tracé de la valeur des pentes en fonction de la concentration donne la courbe de calibration pour la détection du phénol une telle courbe de calibration est représentée sur la figure 5. Les résultats obtenus montrent qu'il est possible de mesurer la concentration de phénol dans un mélange gazeux grâce à une matrice sol gel de l'invention.

### Expérimentation 3: Application du procédé à d'autres composés du phénol

On a procédé comme décrit à l'expérimentation 1, mais en utilisant divers composés du phénol, à savoir le 4-méthoxyphénol, le 2-nitrophénol, le 2,4-dichlorophénol, et le naphtol. Les résultats obtenus sont montrés sur la figure 6.

Les composés du phénol peuvent aussi être aussi bien détectés, mais la longueur d'onde d'absorption maximale diffère alors légèrement de celle observée pour le phénol.

Par conséquent la couleur de la matrice après exposition est aussi différente, comme le montre la comparaison de la figure 1 et de la figure 6. Ainsi, la détection peut être qualitative (ce qui est possible à l'oeil nu) ou quantitative (en procédant à une mesure par absorbance ou réflectance par exemple).

### Expérimentation 4: Calibration de la détection du phénol en solution aqueuse avec une matrice Sol-Gel

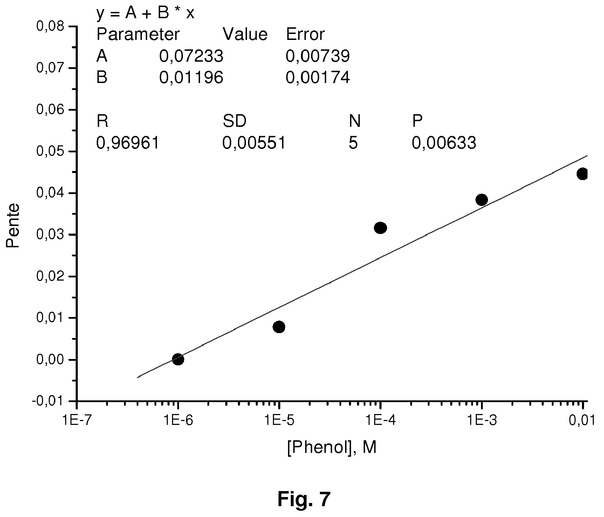

Une matrice Sol-Gel de l'exemple 1 a été placée dans une solution aqueuse de phénol à une concentration connue. L'évolution de l'absorbance de la solution au cours du temps a été suivie à 506 nm grâce à un spectrophotomètre UV-Vis. Ce procédé a été répété pour différentes concentrations de phénol. La vitesse de réaction entre les molécules-sondes de la matrice et le phénol est dépendante de la concentration du phénol. Le tracé de la valeur des pentes en fonction de la concentration constitue la courbe de calibration pour la détection du phénol le résultat obtenu est représenté à la figure 7 Les résultats obtenus montrent qu'il est possible de mesurer la concentration de phénol dans une solution aqueuse grâce à une matrice sol gel de l'invention.

### Expérimentation comparative:

Lorsqu'on ajoute le phénol en dernier pour la réaction en solution aqueuse, en présence d'un excès important d'hexacyanoferrate de potassium, le changement de couleur ne se produit pas.

Même un peu en dessous du rapport typique décrit dans la littérature, soit avec un ratio [AAP]/[hexacyanoferrate de potassium]=1/5, le changement de couleur n'est pas significatif.

Le changement de couleur avec ajout de phénol en dernier devient significatif seulement en modifiant le ratio utilisé dans la méthode de référence. La réaction fonctionne correctement lorsque le phénol est ajouté en dernier si l'on met en oeuvre les différents constituants dans les conditions indiquées ci-dessus dans la description. Notamment l'utilisation soit d'un faible excès de composés oxydants comme l'hexacyanoferrate de potassium, soit d'un excès de réactif capable de générer un produit coloré par formation d'une liaison avec le phénol, soit d'une quantité équivalente de réactif capable de générer un produit coloré par formation d'une liaison avec le phénol et de composés oxydants et la relation entre ces ratios et la possibilité d'apporter le phénol comme dernier réactif, n'avait jamais été envisagés.

Ainsi en conclusion, la méthode colorimétrique de la présente invention apporte un certain nombre d'innovations dont l'ajout du phénol en dernier (indispensable pour effectuer la détection en utilisant une matrice incorporant par avance tous les réactifs), l'incorporation de composants basiques, l'incorporation d'un oxydant dans une même matrice qui peut être conservée plus de 6 mois, et dans certains cas un ratio [réactif coloré]/[oxydant] original.

## Revendications

1. Un matériau nanoporeux monolithique, tenant debout tout seul (c'est-à dire auto porté ou cohésif), solide et transparent, essentiellement exempt de fissures, transparent aux UV, obtenu par voie Sol-Gel, ledit matériau présentant un caractère basique et comprenant
- un réactif capable de générer un produit coloré par formation d'une liaison avec le phénol ou un composé du phénol,
- un composé basique ou mélange de composés basiques et
- un composé ou mélange de composés oxydants.

2. Un matériau nanoporeux monolithique selon la revendication 1, **caractérisé en ce que** le réactif capable de générer un produit coloré est la 4-aminoantipyrine (AAP) ou un dérivé de l'AAP de formule I 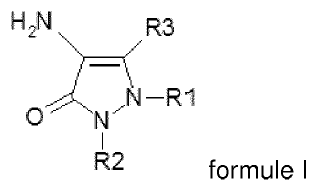 où : R1 est un radical alkyl renfermant de 1 à 30 atomes de carbone, linéaire ou ramifié, ou un radical aryl; R2 est un radical phényl ou para-aminophényl; R3 est un radical alkyle renfermant de 1 à 30 atomes de carbone, linéaire ou ramifié, ou phényl éventuellement substitué.

3. Un matériau nanoporeux monolithique selon la revendication 1 ou 2, **caractérisé en ce que** le composé oxydant ou les composés oxydants sont choisis dans le groupe constitué par le persulfate de potassium, le peroxomonosulfate de potassium, le peroxyde d'hydrogène et l'hexacyanoferrate de potassium.

4. Un matériau nanoporeux monolithique selon l'une des revendications 1 à 3, **caractérisé en ce que** le composé basique ou mélange de composés basiques sont choisis dans le groupe constitué par un tampon borate, phosphate, 2-amino-2-(hydroxyméthyl)-1,3-propanediol, carbonate, glycine-soude, ou soude.

5. Un matériau nanoporeux monolithique selon l'une des revendications 1 à 4, **caractérisé en ce que**
- le réactif capable de générer un produit coloré par formation d'une liaison avec le phénol ou un composé du phénol est l'AAP,
- le composé basique ou mélange de composés basiques est choisi parmi les ions borates et la soude,
- le composé oxydant ou les composés oxydants sont choisis dans le groupe constitué par l'hexacyanoferrate de potassium, le persulfate de potassium, le peroxomonosulfate de potassium ; le peroxyde d'hydrogène ou un mélange d'hexacyanoferrate de potassium et un ou plusieurs autres composés oxydants.

6. Un matériau nanoporeux monolithique selon l'une des revendications 1 à 5, **caractérisé en ce qu'**il renferme pondéralement
- de 25% à 0,005 de molécule-sonde.
- de 5% à 0,05% de composé basique ou mélange de composés basiques,
- de 15% à 0,01%, de composé oxydant ou mélange de composés oxydants.

7. Un matériau nanoporeux monolithique selon l'une des revendications 1 à 5, **caractérisé en ce qu'**il renferme pondéralement
- de 50% à 0,05% de molécule-sonde,
- de 5% à 0,05%, de composé basique ou mélange de composés basiques,
- de 25% à 0,01% de composé oxydant ou mélange de composés oxydants.

8. Un procédé de préparation d'un matériau nanoporeux monolithique tel que défini à l'une des revendications 1 à 7, **caractérisé en ce qu'**il comprend les étapes consistant à :
- dans le même récipient ajouter un ou plusieurs précurseurs de sol gel à une solution de réactif capable de générer un produit coloré par formation d'une liaison avec le phénol ou un composé du phénol,
- ajouter un composé oxydant ou mélange de composés oxydants puis un composé basique ou mélange de composés basiques pour obtenir un pH supérieur à 7, où au moins un de ces composés est en solution aqueuse, pour obtenir un sol
- installer le sol dans un ou plusieurs moules,
- évaporer les solvants sous atmosphère inerte pour obtenir le matériau nanoporeux monolithique désiré.

9. Un procédé selon la revendication 8, **caractérisé en ce que**, après avoir installé le sol dans un ou plusieurs moules, l'on ferme hermétiquement les moules, puis évapore les solvants sous atmosphère inerte.

10. Utilisation d'un matériau nanoporeux monolithique tel que défini à l'une des revendications 1 à 6 dans la détection du phénol ou d'un de ses composés.

11. Utilisation d'un matériau nanoporeux monolithique tel que défini à l'une des revendications 1 à 5 et 7 dans la dépollution sélective du phénol ou d'un de ses composés.
